# EUROPÄISCHE PATENTSCHRIFT

(11) **EP 1 373 994 B1**
(45) Veröffentlichungstag und Bekanntmachung des Hinweises auf die Patenterteilung: **15.12.2004**
(21) Anmeldenummer: 02724112.4
(22) Anmeldetag: 20.03.2002
(51) Int. Cl.: G05B 15/02

(54) **PROZESSLEITSYSTEM**
PROCESS CONTROL SYSTEM
SYSTEME DE GUIDAGE DE PROCESSUS

(30) Priorität: 02.04.2001 DE 10116435
(43) Veröffentlichungstag der Anmeldung: 02.01.2004
(73) Patentinhaber: SIEMENS AKTIENGESELLSCHAFT, 80333 München (DE)
(72) Erfinder: ALBERT, Dirk, 91077 Hetzles (DE); GERK, Uwe, 96158 Frensdorf (DE); KELLNER, Marcel, 91052 Erlangen (DE)
(86) Internationale Anmeldenummer: PCT/DE2002/001011
(87) Internationale Veröffentlichungsnummer: WO 2002/079884

(56) Entgegenhaltungen:
- EP-A- 0 822 473
- EP-A- 0 916 466
- EP-A- 0 964 325
- EP-A- 0 967 766
- WO-A-97/26587
- WO-A-99/13418
- DE-A- 19 615 190
- DE-A- 19 826 169

## Beschreibung

In vielen modernen technischen Anlagen werden Prozessleitsysteme eingesetzt, um zum einen den Betrieb der jeweiligen Anlage möglichst sicher zu gestalten und zum anderen möglichst viele Funktionen der technischen Anlage zu automatisieren.

Waren in vergangenen Zeiten noch eine Vielzahl von Personen mit dem Betrieb einer technischen Anlage betraut, so wird heute das gleiche Aufgabenspektrum von einer weitaus geringeren Anzahl von Personen abgedeckt, unterstützt von einem Prozessleitsystem, welches das Bedienpersonal vom Betriebszustand unterrichtet und welches auszuführende Befehle entgegennimmt und automatisch ausführt, wobei ein Befehl eine Anzahl von Teilbefehlen umfassen kann.

Im Lauf der Zeit wurden so viele ursprünglich an Menschen gerichtete Aufgaben auf das Prozessleitsystem übertragen, so dass die Anzahl der zum Betrieb einer technischen Anlage notwendigen Bedienpersonen immer mehr abnahm.

Früher eingesetzte Prozessleitsysteme waren meist als speziell für die Prozessführung entwickelte Computersysteme ausgebildet, auf welchen eine individuell für den jeweiligen Einsatzfall entwickelte Software ablief, so dass die Bedienung eines derartigen Systems Spezialisten vorenthalten blieb, welche nicht nur mit der Funktion der zu steuernden technischen Anlage genau vertraut sein, sondern auch umfangreiche Schulungen hinsichtlich der Bedienung eines derartigen speziellen Prozessleitsystems durchlaufen mussten.

Im Lauf der Zeit entstanden zwar durch verschiedene Hersteller entwickelte jeweils herstellerspezifisch standardisierte Prozessleitsysteme, so dass Bedienpersonal einer technischen Anlage auch bei einer anderen technischen Anlage einsetzbar ist, welche mittels eines gleichartigen Prozessleitsystem gesteuert ist, aber die Bedienung derartiger Prozessleitsysteme erforderte weiterhin die Verwendung einer meist speziellen Hardware-, sowie einer speziell entwickelten Softwareumgebung. Derartige Prozessleitsysteme können üblicherweise nicht von nahezu beliebig ausgestalteten Rechnern bedient werden, sondern sie erfordern den Einsatz speziell ausgestalteter Rechner. Des Weiteren erforderte der Einsatz von Prozessleitsystemen in technischen Anlagen bisher oft den Einsatz eines speziellen Betriebssystems, beispielsweise UNIX oder auf diesem basierende spezielle Weiterentwicklungen, da die weit verbreiteten und bekannten sonstigen Betriebssysteme, beispielsweise das vorwiegend in der Bürowelt benutzte Betriebssystem Windows, nicht die für ein Prozessleitsystem erforderlichen Eigenschaften, wie z.B. Geschwindigkeit und/oder Zuverlässigkeit und/oder Echtzeitfähigkeit aufweisen.

Ein Bediener eines bekannten Prozessleitsystems musste also bisher Kenntnisse über die Bedienung von Betriebssystemen erlernen, welche nicht so weit verbreitet sind. Er konnte nicht einfach auf Kenntnisse zurückgreifen, welche er bereits über weit verbreitete Betriebssysteme besaß.

Weiterhin war es bei bekannten Prozessleitsystemen schwierig, diese an weitere Rechnersysteme anzukoppeln, um beispielsweise durch ein angekoppeltes weiteres Rechnersystem Funktionen des Prozessleitsystem zu bedienen. Diese Ankopplung erforderte meist eine mehrstufige Umsetzung der verschiedenen Datenformate ineinander, wobei auch die meist untereinander verschiedenen Übertragungsprotokolle der verwendeten Übertragungsmedien zu berücksichtigen waren. Derartige Ankopplungen mussten weiterhin praktisch für jeden einzelnen Anwendungsfall separat projektiert und ausgeführt werden. Jede derartige Ankopplung war praktisch eine Einzellösung.

Besonders schwierig war die Kopplung vorher beschriebener Systeme besonders dann, wenn diese Systeme unter verschiedenen Betriebssystemen liefen und/oder Datenübertragungsmedien zueinander unterschiedlicher Charakteristiken verwendeten und/oder verschiedene Übertragungsprotokolle aneinander angepasst werden mussten.

Im Firmenprospekt web4txp, Siemens AG, herausgegeben im Jahr 2000, ist ein Prozessleitsystem beschrieben, welches mit dem Internet verbindbar und mittels des Internets bedienbar ist.

Ein derartig ausgestaltetes Prozessleitsystem gestattet dem Bedienpersonal, eine technische Anlage mittels eines PCs zu steuern, welcher unter einem weit verbreiteten Betriebssystem, beispielsweise Microsoft Windows, läuft und welcher darüber hinaus im Wesentlichen nur noch einen sogenannten Internet-Browser enthalten muss. Die genannten Mittel aus der PC-Welt sind sehr weit verbreitet und dementsprechend einer großen Anzahl von Personen, nicht nur aus einschlägigen Fachkreisen, bekannt.

Um eine technische Anlage bedienen zu können, muss ein Bediener also nicht mehr umfangreiche Spezialkenntnisse bezüglich der Bedienung eines speziellen Prozessleitsystems erwerben, sondern er kann zur Bedienung zurückgreifen auf Kenntnisse, die er meist schon besitzt, beispielsweise die Bedienung eines (standardmäßigen) Internet-Browsers, dessen Funktionalität heute bereits einer sehr großen Anzahl von Personen bekannt ist.

In einem derartigen Prozessleitsystem ist ein separater Internet-Server vorgesehen, welcher das Prozessleitsystem, bestehend aus Automatisierungssystemen, Leitrechnern und Engineering-Rechnern, mit einem Intranet und/oder dem Internet verbindet.

Nachteilig bei einem derart ausgestalteten Prozessleitsystem ist, dass zwar mittels des Internet-Servers ein Zusammenspiel zwischen den beiden Welten - beispielsweise Windows-PCs eines Intranets einerseits und UNIX-basiertes Prozessleitsystem andererseits - möglich ist, jedoch sind beide genannten Systeme weiterhin in sich abgeschlossen, so dass beispielsweise bei Ausfall des Internet-Servers von den Rechnern des Prozessleitsystems aus keine Funktionen ausführbar sind, beispielsweise ein Internet-Zugriff, welche die dem Prozessleitsystem zugedachten und projektierten Funktionen überschreiten. Des Weiteren ist es bei Ausfall des Internet-Servers beispielsweise nicht möglich, mittels eines an das Intranet angeschlossenen PCs auf das Prozessleitsystem zuzugreifen, obwohl dieses durchaus voll funktionsfähig sein kann. Und nicht zuletzt bedeutet die Verwendung eines separaten Internet-Servers eine zusätzliche Fehlerquelle, welche zum Verlust der Bedien- und Beobachtungsfunktionen der technischen Anlage mittels eines an das Intranet angeschlossenen PCs führen kann.

Des Weiteren ist es bei einem derartigen Leitsystem nicht ausgeschlossen, dass die Leitsystembusse (terminal bus, plant bus) mit Daten beaufschlagt werden, welche mit der eigentlichen Bedienung und Beobachtung der zu steuernden technischen Anlage nicht in Verbindung stehen, so dass die beschriebenen Leitsystembusse von derartigen "Fremddaten" blockiert sein können und daher ihre normale Funktionalität eingeschränkt oder sogar - zumindest zeitweise - verloren sein kann.

In der EP-A-0 967 766 und DE 196 15 190 A sind Prozessleitsysteme mit einem Leitrechner und einem Leitsystembus zur Steuerung einer technischen Anlage offenbart.

Die WO 97 26 587 A zeig ein Automatisierungsgerät, das zur Anbindung ans Internet vorbereitet ist.

Der Erfindung liegt daher die Aufgabe zugrunde, ein Prozessleitsystem anzugeben, welches vor allem leicht und flexibel bedienbar ist, welches nicht durch oben genannte "Fremddaten" blockierbar ist und welches die Steuerung einer technischen Anlage mittels Rechner gestattet, welche keine speziellen Anforderungen hinsichtlich der verwendeten Hard- und Software erfüllen müssen und sich auch an anderen Orten als an dem Ort der technischen Anlage befinden können.

Diese Aufgabe wird erfindungsgemäß gelöst durch ein Prozessleitsystem mit mindestens einem Leitrechner und mindestens einem Leitsystembus zur Steuerung mindestens einer technischen Anlage, wobei
a) das Prozessleitsystem mindestens ein Kommunikationsnetzwerk umfasst, welches mindestens einen daran angeschalteten Rechner umfasst - insbesondere ein Bussystem mit einem oder mehreren daran angeschalteten Rechnern - , wobei das Kommunikationsnetzwerk vom Leitsystembus physikalisch entkoppelt ist,
b) der Leitrechner mit dem Leitsystembus einerseits und dem Kommunikationsnetzwerk andererseits verbunden ist,
c) der Leitrechner ertüchtigt ist, im Leitsystembus anfallende Daten derart aufzubereiten, dass diese Daten vom Rechner des Kommunikationsnetzwerks mittels eines Internet-Browsers verarbeitbar sind,
d) der Leitrechner ertüchtigt ist, im Kommunikationsnetzwerk anfallende Daten, welche den Betrieb der Anlage betreffen und welche mittels eines Internet-Browsers erzeugt sind, derart aufzubereiten, dass die Anlage durch die aufbereiteten Daten steuerbar ist, und
e) die Anlage sowohl mittels des Leitrechners als auch mittels des Rechners des Kommunikationsnetzwerks steuerbar ist, wobei die Anlage mittels des Leitrechners (7) auf mindestens zwei Arten steuerbar ist:
   - mittels einer Bedienung einer Prozessleitsystem-Software über Ein- und/oder Ausgabemittel des Leitrechners (7), und
   - mittels einer Bedienung eines weiteren Internet-Browsers (71),
wobei sowohl die Prozessleitsystem-Software, als auch der weitere Internet-Browser (71) auf dem Leitrechner (7) installiert sind.

Dadurch, dass das Kommunikationsnetzwerk vom Leitsystembus physikalisch entkoppelt ist, also beispielsweise als separates Bussystem ausgeführt ist, kann der Leitsystembus nicht mit Daten beaufschlagt sein, die vom Kommunikationsnetzwerk her stammen und nicht die Steuerung der technischen Anlage betreffen. Die Funktionalität des mindestens einen Leitsystembusses bleibt so voll erhalten, selbst wenn das Kommunikationsnetzwerk beispielsweise infolge eines dort vorherrschenden regen Datenverkehrs oder einer Störung blockiert oder in seiner Funktion eingeschränkt ist.

Des Weiteren ist es bei einem erfindungsgemäßen Prozessleitsystem gewährleistet, dass die technische Anlage - solange mindestens ein Leitsystemrechner funktionsfähig ist - sowohl mittels des Leitrechners als auch mittels eines Rechners des Kommunikationsnetzwerks steuerbar ist. Eine Bedienung und Beobachtung der technischen Anlage beispielsweise über ein Intranet und/oder über das Internet ist also immer gewährleistet, solange mindestens ein Leitrechner funktionsfähig ist; es kann also nicht passieren, dass zwar das Prozessleitsystem an sich funktionsfähig ist, aber eine Bedienung über ein Intranet und/oder über das Internet nicht möglich ist (obwohl die genannten Netze funktionstüchtig sind).

Des Weiteren ist es bei einem erfindungsgemäßen Prozessleitsystem möglich, dass Bedienpersonal, welches nicht speziell für die Bedienung des Prozessleitsystems geschult ist, trotzdem Bedien- und Beobachtungshandlungen am Leitrechner vornehmen kann, da dieser die Daten, welche die Steuerung der technischen Anlage betreffen, so aufbereiten kann, dass sie mittels eines Internet-Browsers verarbeitbar sind; dazu muss nur auf dem Leitrechner vorteilhaft ein bekannter Internet-Browser installiert sein. So kann Bedienpersonal auf einfache Weise auf Leitsystem-Daten zugreifen, ohne speziell in der Bedienung des Leitsystems geschult sein zu müssen. Der Leitrechner eines erfindungsgemäßen Prozessleitsystems stellt dem Bedienpersonal also mehrere Möglichkeiten der Bedienung der technischen Anlage zur Verfügung, welche je nach Kenntnisstand des Bedienpersonals nutzbar sind.

Vorteilhaft ist der Rechner des Kommunikationsnetzwerks mittels eines anderen Betriebssystems betrieben als der Leitrechner.

Auf diese Weise ist es möglich, das Kommunikationsnetzwerk so auszugestalten, dass die Bedienung dessen Rechner sehr einfach ist, weil beispielsweise vorteilhaft bekannte PCs mit dem bekannten Betriebssystem Microsoft Windows eingesetzt sind, obwohl für die Steuerung der technischen Anlage durch das Prozessleitsystem beispielsweise das Betriebssystem UNIX erforderlich ist. Das Bedienpersonal, welches sich zur Steuerung der technischen Anlage des Kommunikationsnetzes bedient, kann also auf meist schon vorhandene Kenntnisse eines Betriebssystems und/oder eines Internet-Browsers zurückgreifen.

Besonders vorteilhaft umfasst das Kommunikationsnetzwerk mindestens einen Teil des Internets und/oder eines Intranets.

In vielen Betrieben existiert bereits beispielsweise ein eigenes betriebsinternes Computernetzwerk, ein sogenanntes Intranet. In dieser vorteilhaften Ausgestaltung der Erfindung ist es nun möglich, an dieses Intranet angeschaltete Rechner dazu zu benutzen, um die technische Anlage zu steuern. Die Funktionalität eines betriebsinternen Intranets wird dadurch erheblich erweitert, so dass neben den klassischen Aufgaben des Datenaustauschs nun auch Steuerungsaufgaben ausführbar sind, ohne ein neues Netzwerk speziell für Steuerungsaufgaben installieren zu müssen.

In dieser vorteilhaften Ausgestaltung der Erfindung ist es weiterhin möglich, die technische Anlage über Rechner zu steuern, welche an das Internet angeschlossen sind. Internet-Zugänge, beispielsweise über ein Telefonnetz oder über Satelliten-Verbindungen, sind an sehr vielen Orten der Erde vorhanden. So kann das vorhandene Internet dazu benutzt werden, die technische Anlage, welche sich an einem praktisch beliebigen Ort auf der Erde befinden kann, mittels eines an das Internet angeschlossenen PCs zu steuern. Es ist nicht nötig, dazu ein separates Steuerungsnetzwerk zu installieren.

Besonders vorteilhaft sind durch das Prozessleitsystem mittels des Rechners des Kommunikationsnetzwerks mehrere technische Anlagen steuerbar, welche sich an verschiedenen physikalischen Orten auf der Erde befinden.

Diese technischen Anlagen sind erfindungsgemäß jeweils mit einem Intranet und/oder dem Internet verbunden, so dass ein Zugriff auf die Prozessdaten dieser technischen Anlagen praktisch von jedem Ort aus möglich ist, an dem ein Intranet- bzw. Intranet-Zugang möglich ist. Die Steuerung von mehreren technischen Anlagen von einer derartigen Zentrale aus ist also an nahezu beliebigen Orten möglich, ohne dass zur Versorgung der Zentrale mit Prozessdaten der technischen Anlage ein separates Datennetzwerk installiert werden muss.

Zusammenfassend lässt sich zu allen Ausgestaltungen eines erfindungsgemäßen Prozessleitsystems sagen, dass sehr viele Tätigkeiten, welche bisher den Aufenthalt in der technischen Anlage und/oder deren Warte notwendig machten, nun von nahezu beliebigen Orten aus mit einfachen Mitteln durchführbar sind, wobei Standard-PCs mit Standard-Software(beispielsweise Microsoft Windows, Microsoft Internet-Explorer, Netscape Navigator etc.) einsetzbar sind.

Im Folgenden werden zwei Ausführungsbeispiele der Erfindung dargestellt.

Es zeigen:
- FIG 1: ein erfindungsgemäßes Prozessleitsystem, bei welchem ein Leitsystembus mit einem Kommunikationsnetzwert durch einen Leitrechner verbunden ist, und
- FIG 2: ein erfindungsgemäßes Prozessleitsystem, durch welches die Steuerung von zwei technischen Anlagen ermöglicht ist, welche sich an unterschiedlichen physikalischen Orten befinden.

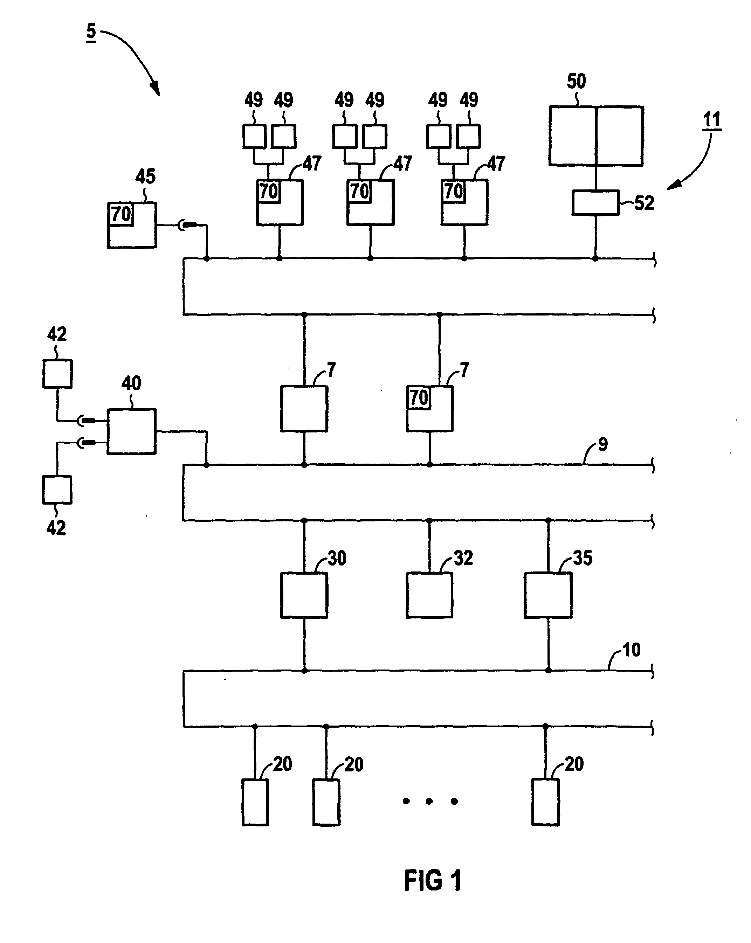

FIG 1 zeigt ein erfindungsgemäßes Prozessleitsystem 5. Das Prozessleitsystem 5 umfasst zwei Leitrechner 7, welche einerseits mit einem Leitsystembus 9 und andererseits mit einem Kommunikationsnetzwerk 11 verbunden sind.

Des Weiteren umfasst das Prozessleitsystem 5 im vorliegenden Ausführungsbeispiel einen zweiten Leitsystembus 10. An einen der Leitsystembusse 9,10 sind Automatisierungssysteme 20 angeschaltet, um beispielsweise die in einer zu steuernden Anlage anfallenden Daten zu erfassen und über den anderen Leitsystembus mittels eines Verarbeitungsrechners 30 an die Leitrechner 7 zu übermitteln. An mindestens einen der Leitsystembusse 9,10 ist weiterhin ein Datenbankrechner 32 angeschaltet, welcher die Funktion einer zentralen Datenbasis des Prozessleitsystems 5 realisiert, so dass der Datenbestand des Prozessleitsystems 5 an einer zentralen Stelle verfügbar ist und sich so keine Probleme mit zueinander inkonsistenten Datenbeständen ergeben, die auf mehrere Rechner verteilt sein könnten und den Betrieb der technischen Anlage betreffen.

Ein Projektierungsrechner 35 ist derart an die Leitsystembusse 9,10 des erfindungsgemäßen Prozessleitsystems angeschlossen, dass Projektierungsdaten, welche beispielsweise den Betrieb der technischen Anlage und/oder den Aufbau und/oder die Funktion des Prozessleitsystems 5 betreffen, sowohl an die Leitrechner 7 als auch an die Automatisierungssysteme 20 übermittelbar sind. Der Projektierungsrechner 35 realisiert also im vorliegenden Ausführungsbeispiel einen zentralen Rechner, von welchem aus Projektierungspersonal, welches mit der Realisierung von Funktionalität des Prozessleitsystems 5 betraut ist, Daten an alle wesentlichen Zielgeräte - vorrangig die Leitrechner 7 und die Automatisierungssysteme 20 - transferieren kann. So können beispielsweise Änderungen, die die Projektierung der Leitrechner 7 und/oder der Automatisierungssysteme 20 betreffen, von diesem Projektierungsrechner 35 aus durchgeführt werden, ohne dass sich das Bedienpersonal direkt an den Aufstellungsort der vorher genannten Systeme begeben muss. Auf diese Weise wird weiterhin die Entstehung von inkonsistenten Projektierungsdatenbeständen vermieden.

Mittels einer Kopplungseinheit 40 können weiterhin mobile Projektierungsrechner 42 angeschaltet sein, so dass der Ort der Projektierung des Prozessleitsystems 5 an jede Stelle in der technischen Anlage verlegt werden kann, an der ein Zugriff auf mindestens einen Leitsystembus 9,10 möglich ist.

In den Leitrechnern 7 sind die wesentlichen Funktionen implementiert, die das Prozessleitsystem 5 zur Steuerung der technischen Anlage zur Verfügung stellt. Die Leitrechner 7 können mit Bildschirmen versehen sein, so dass die technische Anlage besonders leicht von den Leitrechnern 7 aus steuerbar ist.

Die Leitrechner 7 sind weiterhin ertüchtigt, in mindestens einem Leitsystembus 9,10 anfallende Daten derart aufzubereiten, dass diese Daten von einem oder mehreren Rechnern 47 des Kommunikationsnetzwerks 11 mittels eines Internet-Browsers 70 verarbeitbar sind. Dies bedeutet, dass auf diese Weise die Bedienung wesentlicher Funktionen des Prozessleitsystems 5 auch durch andere Rechner als die Leitrechner 7, bei welchen üblicherweise eine spezielle Prozessleitsystem-Software implementiert ist, möglich wird. Ferner ist es im vorliegenden Ausführungsbeispiel möglich, bei demjenigen Leitrechner 7, welcher auch über einen installierten Internet-Browser verfügt, die technische Anlage auf zwei verschiedene Arten zu steuern: Zum einen kann das Bedienpersonal mittels des besagten Leitrechners 7 die Anlage dadurch steuern, indem es, nach entsprechend vorangegangener Ausbildung und Schulung, die in diesem Leitrechner 7 implementierte Prozessleittechnik-Spezialsoftware bedient und deren Möglichkeiten der Datenein- und Datenausgabe sowie des Datentransfers nutzt. Des Weiteren besteht an diesem Leitrechner 7 weiterhin die Möglichkeit, zumindest auf einen Teil der Funktionalität des Prozessleitsystems 5 mittels des Internet-Browsers 70 zuzugreifen. Dies bedeutet, dass Bedienpersonal, welches diese Möglichkeit der Bedienung wählt, üblicherweise keine so spezielle Schulung der Prozessleittechnik-Funktionalität und Bedienung benötigt, da die Bedienung eines (standardmäßigen) Internet-Browsers 70 meist bereits bekannt ist. So ist es möglich, dass der Schulungsbedarf hinsichtlich der Bedienung des Prozessleitsystems 5 reduziert ist, wenn die Möglichkeit der Steuerung der technischen Anlage mittels des Internet-Browsers 70 gewählt wird.

Da der oder die Leitrechner 7 weiterhin die in mindestens einem Leitsystem 9,10 anfallenden Daten, mindestens diejenigen, die das Bedienen und/oder das Beobachten der technischen Anlage betreffen, für einen Internet-Browser lesbar aufbereiten und die Daten an ein Kommunikationsnetzwerk 11 übermitteln, welches physikalisch von dem oder den Leitsystembussen 9,10 entkoppelt ist - also beispielsweise separat als Bussystem ausgeführt ist, auf dem sich auch solche Daten befinden können, welche nicht die Steuerung der technischen Anlage betreffen -, ist es möglich, die technische Anlage mittels Bedienterminals 47, beispielsweise Standard-PCs mit dem Betriebssystem Microsoft Windows und einem installierten (standardmäßigen) Internet-Browser 70, zu steuern. Im Kommunikationsnetzwerk 11 anfallende Daten, welche den Betrieb der technischen Anlage betreffen und welche mittels des Internet-Browsers 70 erzeugt sind, werden von dem oder den Leitrechnern 7 derart aufbereitet, dass die Anlage durch die aufbereiteten Daten steuerbar ist. Es kann auch ein oder mehrere mobile Bedienterminals 45 mit einem installierten Internet-Browser 70 vorgesehen sein, durch welche ebenfalls ein Betrieb der technischen Anlage vornehmbar ist. Üblicherweise sind die Bedienterminals 47 mit einem der mehreren Bildschirmen 49 verbunden, so dass jegliche Arbeit an diesen Bedienterminals 47 optimal visuell unterstützt ist. Im vorliegenden Ausführungsbeispiel ist weiterhin eine Großbildschirmeinheit 50 vorgesehen, welche mittels eines Bildsplit-Rechners an den Bus des Kommunikationsnetzwerks 11 angekoppelt ist. Ein derartiges Großbildsystem ist besonders geeignet, um beispielsweise Betriebszustände der technischen Anlage auch in größerer Entfernung von der Bildschirmeinheit 50 ablesen zu können.

Das Kommunikationsnetzwerk 11 muss sich nicht in der Nähe der zu steuernden technischen Anlage befinden. Es kann z.B. auch zumindest einen Teil eines betriebsinternen Intranets und/oder einen Teil des Internets umfassen, so dass der Ort des Betriebs und/oder der Wartung und/oder der Projektierung einer technischen Anlage an nahezu jeden Ort der Erde verlegbar ist, an dem ein Zugriff auf das Kommunikationsnetzwerk 11 möglich ist.

Die Bedienterminals 47 sowie das oder die mobile Bedienterminals 45 können neben dem Internet-Browser 70 weiterhin nahezu beliebige Softwarepakete enthalten, beispielsweise Textverarbeitungsprogramme, Tabellenkalkulationsprogramme, Programme zum Kostenmanagement, Lagerhaltungsprogramme, Betriebsführungsprogramme, etc. Dies ist beispielsweise oft bei firmeninternen Intranets der Fall, bei denen eine Anzahl von Rechnern zusammengeschaltet ist, die untereinander Daten austauschen und auf denen jegliche Arten von Programmen ablaufen. Das Bussystem des Kommunikationsnetzwerks 11 kann also praktisch mit jeglicher Art von Daten beaufschlagt sein, also besonders auch mit einer u. U. sehr großen Datenmenge, welche nicht das Bedienen und/oder Beobachten der technischen Anlage betrifft. Da das Kommunikationsnetzwerk 11 vom Leitsystembus 9 entkoppelt ist, können derartige "prozessleitsystem-fremde" Daten die Funktion des Prozessleitsystems 5 nicht beeinträchtigen, da derartige "störende" Daten auf das Kommunikationsnetzwerk 11 beschränkt bleiben und den Leitsystembus 9 nicht blockieren können.

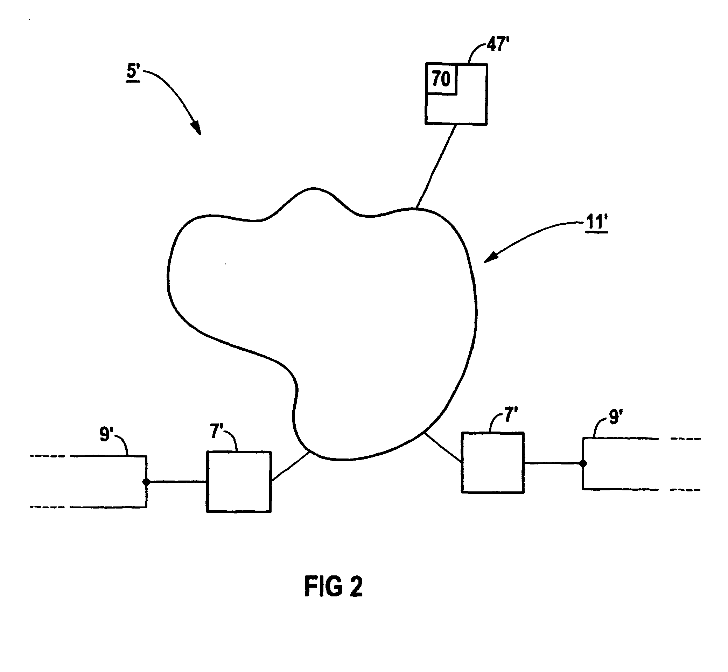

FIG 2 zeigt ein Prozessleitsystem 5', welches ein Kommunikationsnetzwerk 11' umfasst. Das Kommunikationsnetzwerk 11' kann z.B. ausgebildet sein als sogenanntes Wide Area Network (WAN), welches in der Regel eine größere räumliche Erstreckung aufweist, oder als zumindest ein Teil des Internets, welches sich praktisch über die ganze Erde erstreckt.

Das erfindungsgemäße Prozessleitsystem 5' gestattet die Steuerung von exemplarisch dargestellten zwei technischen Anlagen, welche jeweils über mindestens einen Leitrechner 7' und mindestens über je einen Leitsystembus 9' verfügen. Die Leitrechner 7' der beiden technischen Anlagen bereiten die in den jeweiligen Leitsystembussen 9' anfallenden Daten so auf, dass sie von einem Bedienterminal 47' des Kommunikationsnetzwerks 11' mittels eines Internet-Browsers verarbeitbar sind. Des Weiteren sind die Leitrechner 7' der beiden technischen Anlagen jeweils ertüchtigt, im Kommunikationsnetzwerk 11' anfallende Daten, welche den Betrieb mindestens einer der technischen Anlagen betreffen und welche mittels des Internet-Browsers 70 erzeugt sind, derart aufzubereiten, dass die betreffende technische Anlage durch die aufbereiteten Daten steuerbar ist.

Auf diese Weise ist es möglich, dass mehrere - im vorliegenden Ausführungsbeispiel zwei - technische Anlagen, welche sich an physikalisch unterschiedlichen Orten befinden, mittels eines Bedienterminals 47', welches einen Internet-Browser 70 umfasst, steuerbar sind.

Die beiden technischen Anlagen sind weiterhin sowohl mittels des Bedienterminals 47' als auch mittels des mindestens einen, zur jeweiligen Anlage gehörigen Leitrechners 7' steuerbar.

## Patentansprüche

1. Prozessleitsystem (5) mit mindestens einem Leitrechner (7) und mindestens einem Leitsystembus (9,10) zur Steuerung mindestens einer technischen Anlage,
**dadurch gekennzeichnet, dass**
a) das Prozessleitsystem (5) mindestens ein Kommunikationsnetzwerk (11), welches mindestens einen daran angeschalteten Rechner (47) enthält - insbesondere ein Bussystem mit einem oder mehreren daran angeschalteten Rechnern - umfasst, wobei das Kommunikationsnetzwerk (11) vom Leitsystembus (9,10) physikalisch entkoppelt ist,
b) der Leitrechner (7) mit dem Leitsystembus (9,10) einerseits und dem Kommunikationsnetzwerk (11) andererseits verbunden ist,
c) der Leitrechner (7) ertüchtigt ist, im Leitsystembus (9,10) anfallende Daten derart aufzubereiten, dass diese Daten vom Rechner (47) des Kommunikationsnetzwerks (11) mittels eines Internet-Browsers (70) verarbeitbar sind,
d) der Leitrechner (7) ertüchtigt ist, im Kommunikationsnetzwerk (11) anfallende Daten, welche den Betrieb der Anlage betreffen und welche mittels eines Internet-Browsers (70) erzeugt sind, derart aufzubereiten, dass die Anlage durch die aufbereiteten Daten steuerbar ist, und
e) die Anlage sowohl mittels des Leitrechners (7) als auch mittels des Rechners (47) des Kommunikationsnetzwerks steuerbar ist, wobei die Anlage mittels des Leitrechners (7) auf mindestens zwei Arten steuerbar ist:
- mittels einer Bedienung einer Prozessleitsystem-Software über Ein- und/oder Ausgabemittel des Leitrechners (7), und
- mittels einer Bedienung eines weiteren Internet-Browsers (71),
wobei sowohl die Prozessleitsystem-Software, als auch der weitere Internet-Browser (71) auf dem Leitrechner (7) installiert sind.

2. Prozessleitsystem nach Anspruche 1,
**dadurch gekennzeichnet, dass**
der Rechner (47) des Kommunikationsnetzwerks (11) mittels eines anderen Betriebsystems betrieben ist als der Leitrechner (7).

3. Prozessleitsystem nach Anspruch 1 oder 2,
**dadurch gekennzeichnet, dass**
das Kommunikationsnetzwerk (11') mindestens einen Teil des Internets und/oder eines Intranets umfasst.

4. Prozessleitsystem nach Anspruch 3,
**dadurch gekennzeichnet, dass**
durch das Prozessleitsystem (5') mittels des Rechners (47') des Kommunikationsnetzwerks (11') mehrere technische Anlagen, welche sich an verschiedenen physikalischen Orten befinden, steuerbar sind.

## Claims

1. Process control system (5) having at least one control computer (7) and at least one control system bus (9, 10) for controlling at least one technical installation,
**characterized in that**
a) the process control system (5) comprises at least one communication network (11) which contains at least one computer (47) connected thereto - particularly a bus system having one or more computers connected thereto -, with the communication network (11) being physically decoupled from the control system bus (9, 10),
b) the control computer (7) is connected firstly to the control system bus (9, 10) and secondly to the communication network (11),
c) the control computer (7) is capable of conditioning data which arise in the control system bus (9, 10) such that these data can be processed by the computer (47) in the communication network (11) using an Internet browser (70),
d) the control computer (7) is capable of conditioning data which arise in the communication network (11) and which relate to the operation of the installation and are produced using an Internet browser (70) such that the installation can be controlled by the conditioned data, and
e) the installation can be controlled both using the control computer (7) and using the computer (47) in a communication network, the installation being able to be controlled in at least two ways using the control computers (7);
- by using process control system software using input and/or output means on the control computer (7), and
- by using a further Internet browser (71),
both the process control system software and the further Internet browser (71) being installed on the control computer (7).

2. Process control system according to Claim 1,
**characterized in that**
the computer (47) in the communication network (11) is operated using a different operating system than the control computer (7).

3. Process control system according to Claim 1 or 2,
**characterized in that**
the communication network (11') comprises at least part of the Internet and/or of an intranet.

4. Process control system according to Claim 3,
**characterized in that**
the process control system (5') can use the computer (47') in the communication network (11') to control a plurality of technical installations which are situated at various physical locations.

## Revendications

1. Système de contrôle de processus (5) comportant au moins un ordinateur de contrôle (7) et au moins un bus de système de contrôle (9, 10) pour la commande d'au moins une installation technique,
**caractérisé par le fait que**
a) le système de contrôle de processus (5) comprend au moins un réseau de communication (11) qui comprend au moins un ordinateur raccordé (47) - notamment un système de bus avec un ou plusieurs ordinateurs raccordés -, le réseau de communication (11) étant découplé physiquement du bus de système de contrôle (9, 10),
b) l'ordinateur de contrôle (7) est relié d'une part au bus de système de contrôle (9, 10) et d'autre part au réseau de communication (11),
c) l'ordinateur de contrôle (7) est capable de préparer des données arrivant dans le bus de système de contrôle (9, 10) de telle sorte que ces données peuvent être traitées par l'ordinateur (47) du réseau de communication (11) au moyen d'un navigateur internet (70),
d) l'ordinateur de contrôle (7) est capable de préparer des données arrivant dans le réseau de communication (11), concernant le fonctionnement de l'installation et produites au moyen d'un navigateur internet (70) de telle sorte que l'installation peut être commandée par les données préparées, et
e) l'installation est commandable aussi bien au moyen de l'ordinateur de contrôle (7) qu'au moyen de l'ordinateur (47) du réseau de communication, l'installation étant commandable au moyen de l'ordinateur de contrôle (7) selon au moins deux modes :
- au moyen d'une exploitation d'un logiciel de système de contrôle de processus par l'intermédiaire de moyens d'entrée et/ou de sortie de l'ordinateur de contrôle (7), et
- au moyen d'une exploitation d'un autre navigateur internet (71),
aussi bien le logiciel de système de contrôle de processus que l'autre navigateur internet (71) étant installés sur l'ordinateur de contrôle (7).

2. Système de contrôle de processus selon la revendication 1,
**caractérisé par le fait que** l'ordinateur (47) du réseau de communication (11) est exploité au moyen d'un autre système d'exploitation que l'ordinateur de contrôle (7).

3. Système de contrôle de processus selon la revendication 1 ou 2,
**caractérisé par le fait que** le réseau de communication (11') comprend au moins une partie d'internet et/ou d'un intranet.

4. Système de contrôle de processus selon la revendication 3,
**caractérisé par le fait que** plusieurs installations techniques se trouvant à des endroits différents sont commandables par le système de contrôle de processus (5') au moyen de l'ordinateur (47') du réseau de communication (11').
